# EUROPÄISCHE PATENTANMELDUNG

(11) **EP 3 699 066 A1**
(43) Veröffentlichungstag der Anmeldung: **26.08.2020**
(21) Anmeldenummer: 19158310.3
(22) Anmeldetag: 20.02.2019
(51) Int. Cl.: B62D 37/04

(54) **SELBSTBALANCIERENDES FAHRERLOSES TRANSPORTFAHRZEUG**

(71) Anmelder: Siemens Aktiengesellschaft, 80333 München (DE)
(72) Erfinder: ENENKEL, Peter, 78462 Konstanz (DE); UMBACH, Max, 78464 Konstanz (DE)
(74) Vertreter: Maier, Daniel Oliver

(57) **Zusammenfassung**

Fahrerloses Transportfahrzeug (1) für Stückgüter (5), umfassend ein Fahrwerk (2), einen Fahrantrieb (23), ein auf dem fahrerlosen Transportfahrzeug (1) installiertes Lastverschiebungsmittel (3) mit einem Lastverschiebungsantrieb (33) und ein Regelungssystem (7);
wobei das Fahrwerk (2) mindestens zwei in einer Achse (9) angeordnete Räder (21) umfasst;
wobei der Fahrantrieb (23) ausgestaltet ist, die mindestens zwei Räder (21) anzutreiben;
wobei das Lastverschiebungsmittel (3) ausgestaltet ist, ein Stückgut (5) aufzunehmen und dessen Massenschwerpunkt auf dem fahrerlosen Transportfahrzeug (1) zu verschieben;
wobei das Regelungssystem (7) ausgestaltet ist, den Fahrantrieb (23) so zu regeln, dass ein Kippen des Transportfahrzeugs (1) um die Achse (9) des Fahrwerks (2) verhindert wird, während das fahrerlose Transportfahrzeug (1) auf nur den mindestens zwei in der Achse (9) angeordneten Rädern (21) balanciert;
wobei das Regelungssystem (7) zudem ausgestaltet ist, den Lastverschiebungsantrieb (33) so anzusteuern, dass die Position des Massenschwerpunkts des Stückguts (5) für ein zu vollführendes Fahrmanöver angepasst wird.

## Beschreibung

Die Erfindung bezieht sich auf das technische Gebiet der fahrerlosen Transportfahrzeuge (FTF) zum Transport von Stückgütern sowie auf die Verwendung solcher Transportfahrzeuge zum Transportieren, Verteilen und/oder Sortieren von Stückgütern, sowie auf eine Sortieranlage welche solche Transportfahrzeuge umfasst.

Für fahrerlose Transportfahrzeuge (Englisch auch Automated Guided Vehicle, AGV genannt), werden heute abhängig vom Anwendungsfall zahlreiche und sehr unterschiedliche Antriebskonzepte verwendet. Für den Anwendungsfall des Transports, der Lagerung, der Kommissionierung und der Sortierung von Stückgütern im postalischen und im Flughafenumfeld, wie Gepäck, Paketen und Sperrgut, ergeben sich spezielle Herausforderungen, denen die vorhandenen Konzepte nur unzureichend gerecht werden.

Diese speziellen Herausforderungen sind:
- Inhomogene Form und Hüllenmaterial der Stückgüter, was zur Folge haben kann, dass die Stückgüter rollen, kippen, rutschen, verkanten oder verhaken;
- Inhomogene Massenverteilung führt zu einem Massenschwerpunkt der nicht mit dem geometrischen Schwerpunkt übereinstimmt, wie es die äussere Form des Stückgutes vermuten liesse;
- Auch kann sich während des Transports der Massenschwerpunkt undefiniert verlagern, beispielsweise wenn das Stückgut ein Paket oder ein Gepäckstück mit losem Inhalt ist;
- Es ist wünschenswert höhengängige Fahrprofile vollführen zu können, mit rauem Fahrbelag, sowie Steigungen, Gefällen, Helices, Stufen und Spalten überwinden zu können;
- Auch eine einfache Adaption an vorhandene Infrastruktur ist wünschenswert (Migration).

Bisher werden FTF überwiegend mit mehr als einer Achse gebaut, es handelt sich also um statisch stabilisierte Systeme.

Um unebene Bodenstrukturen überwinden zu können werden unterschiedliche Konzepte verfolgt:
- Statisch bestimmte Dreipunktlagerung (z.B. Dreirad);
- Boogie-Fahrwerkstechnik (wie beim Mars Rover);
- Gefederte Stützräder;
- Gefederte Einzelradaufhängung (wie beim aktuellen Automobilen) .

Diese Konzepte weisen basieren auf aufwändigen Fahrwerken. Den oben aufgelisteten Herausforderungen können sie somit nur durch erhebliche Kosten für das Fahrzeugfahrwerk selbst entsprochen werden.

Aus einem andern technischen Gebiet des Transports von relativ fixen Massen, wie Personen oder Gütern sind selbstbalancierende einachsige Fahrzeuge bekannt und beispielsweise in den folgenden Links dokumentiert:
https://www.youtube.com/watch?v=ZhhRBUdnliI
https://www.youtube.com/watch?v=3Tie5-kgHlk

Diese Links offenbaren als Rollstuhl ausgestaltete selbstbalancierende Systeme nach dem Segway-Prinzip. Auf diesen lassen sich Personen sowie auch fix positionierte Objekte transportieren.

Für inhomogene Güter mit undefiniert beweglichem Massenschwerpunkt sind solche Vorrichtungen nicht bekannt und Personen sowie Güter werden durch menschliche Eingriffe auf eine geeignete Position des einachsigen selbstbalancierenden Fahrzeugs geladen.

Der vorliegenden Erfindung liegt daher die Aufgabe zugrunde, ein Konzept bereitzustellen, mit dem sich Stückgüter möglichst flexibel und kostengünstig mittels eines FTF transportieren lassen.

Diese Aufgabe wird durch die in den unabhängigen Ansprüchen beschriebenen Konzepte gelöst.

Erfindungsgemäss wird ein fahrerloses Transportfahrzeug für Stückgüter vorgestellt. Das fahrerlose Transportfahrzeug umfasst ein Fahrwerk, einen Fahrantrieb, ein auf dem fahrerlosen Transportfahrzeug installiertes Lastverschiebungsmittel mit einem Lastverschiebungsantrieb und ein Regelungssystem. Das Fahrwerk umfasst mindestens zwei in einer Achse angeordnete Räder. Der Fahrantrieb ist ausgestaltet, die mindestens zwei Räder anzutreiben. Das Lastverschiebungsmittel ist ausgestaltet, ein Stückgut aufzunehmen und dessen Massenschwerpunkt auf dem fahrerlosen Transportfahrzeug zu verschieben. Das Regelungssystem ist ausgestaltet, den Fahrantrieb so zu regeln, dass ein Kippen des Transportfahrzeugs um die Achse des Fahrwerks verhindert wird, während das fahrerlose Transportfahrzeug auf nur den mindestens zwei in der Achse angeordneten Rädern balanciert. Das Regelungssystem ist zudem ausgestaltet, den Lastverschiebungsantrieb so zu anzusteuern, dass die Position des Massenschwerpunkts des Stückguts für ein zu vollführendes Fahrmanöver angepasst wird.

Gemäss einem Ausführungsbeispiel ist das Lastverschiebungsmittel als Fördermittel ausgestaltet, beispielsweise als Förderstrecke, Förderband, Gurtförderer oder Rollenförderer. Diese erlauben eine zuverlässige und einfache Anpassung der Position Massenschwerpunkts des Stückgutes. Insbesondere erlauben Förderbänder und Gurtförderer eine besonders zuverlässige Anpassung der Position Massenschwerpunkts von unförmigen Stückgütern.

Gemäss einem Ausführungsbeispiel sind die Räder einzeln antreibbar. Dies ermöglicht eine hohe Wendigkeit des fahrerlosen Transportfahrzeugs.

Gemäss einem Ausführungsbeispiel umfasst das Fahrwerk genau zwei seitlich an dem fahrerlosen Transportfahrzeug in der Achse angeordnete Räder. Dadurch ergibt sich eine besonders einfache Konstruktion des fahrerlosen Transportfahrzeugs.

Gemäss einem Ausführungsbeispiel ist das Lastverschiebungsmittel ausgestaltet, den Massenschwerpunkt des Stückguts auf dem fahrerlosen Transportfahrzeug in Fahrtrichtung und entgegen der Fahrtrichtung verschieben. Dies erlaubt besonders wirksame Möglichkeiten der Anpassung der Lage des Massenschwerpunktes des Stückgutes für unterschiedliche Fahrmanöver.

Gemäss einem Ausführungsbeispiel umfasst das fahrerlose Transportfahrzeug zusätzlich ein Stützradsystem oder ein Ständersystem das ausgestaltetet ist, bei ausgeschaltetem Regelungssystem einen stabilen Stand des fahrerlosen Transportfahrzeugs sicherzustellen. Dies erlaubt auch bei ausgeschaltetem Regelungssystem einen stabilen Stand des fahrerlosen Transportfahrzeugs. Zudem kann da Stützrad- oder Ständersystem auch für anspruchsvolle Fahrmanöver und Vorgänge, wie beispielsweise beim Beladen des Transportfahrzeugs zusätzliche Stabilität sicherstellen.

Gemäss einem Ausführungsbeispiel ist das Regelungssystem ausgestaltet, das Stützrad- oder Ständersystem für das zu vollführende Fahrmanöver ein- und/oder auszufahren. Dies erlaubt eine höhere Vielfältigkeit der möglichen durch das fahrerlose Transportfahrzeug vollführbaren Fahrmanöver.

Gemäss einem Ausführungsbeispiel umfasst das Fahrmanöver ein Befahren einer Steigung und das Regelungssystem ist ausgestaltet, für das Befahren der Steigung den Lastverschiebungsantrieb so zu anzusteuern, dass die Position des Massenschwerpunkts des Stückguts in oder entgegen der Fahrtrichtung verschoben wird. Dies ermöglicht es, das Stückgut trotz dem Befahren der Steigung in einer waagrechten Position zu halten oder zumindest die Position des Massenschwerpunkts des Stückgutes so anzupassen, dass das Stückgut in einer weniger schiefen Position auf dem Lastverschiebungsmittel gelagert wird, als dies der Fall bei einer nicht angepassten Position der Fall wäre. Bei einer Bergauffahrt kann das Regelungssystem beispielsweise ausgestaltet sein, für das Befahren der Steigung den Lastverschiebungsantrieb so zu anzusteuern, dass die Position des Massenschwerpunkts des Stückguts in Fahrtrichtung verschoben wird oder dass die Position des Massenschwerpunkts des Stückguts in der Fahrtrichtung vor der Achse positioniert wird. Für eine Bergabfahrt kann das Regelungssystem beispielsweise ausgestaltet sein, den Lastverschiebungsantrieb so zu anzusteuern, dass die Position des Massenschwerpunkts des Stückguts entgegen der Fahrtrichtung verschoben wird oder dass die Position des Massenschwerpunkts des Stückguts hinter der Achse positioniert wird.

Gemäss einem Ausführungsbeispiel umfasst das Fahrmanöver ein Bremsmanöver und das Regelungssystem ist ausgestaltet, den Lastverschiebungsantrieb für das Bremsmanöver so anzusteuern, dass die Position des Massenschwerpunkts des Stückguts entgegen der Fahrtrichtung verschoben wird. Dies erlaubt einen kürzeren Bremsweg, denn sonst würde beim Bremsmanöver durch die Trägheit des Stückguts sowie des oberen Teils des Transportfahrzeugs, das Transportfahrzeug nach vorne neigen, was wiederum durch eine Beschleunigung des Fahrantriebs ausgeglichen werden müsste, damit das Transportfahrzeug nicht nach vorne kippt.

Gemäss einem Ausführungsbeispiel umfasst das Fahrmanöver ein Anfahr- oder Beschleunigungsmanöver und das Regelungssystem ist ausgestaltet, den Lastverschiebungsantrieb für das Anfahr- oder Beschleunigungsmanöver so zu anzusteuern, dass die Position des Massenschwerpunkts des Stückguts in Fahrtrichtung verschoben wird. Dies erlaubt schnellere Anfahr- und Beschleunigungsmanöver, da ansonsten das fahrerlose Transportfahrzeug durch eine kurze Beschleunigung entgegen der beabsichtigten Fahrtrichtung in eine in Fahrtrichtung geneigte Lage versetzt werden muss, damit das Transportfahrzeug dann wiederum in Fahrtrichtung beschleunigt werden kann, ohne dass es kippt.

Gemäss einem Ausführungsbeispiel ist das Regelungssystem 7 ausgestaltet, den Lastverschiebungsantrieb 33 und/oder den Fahrantrieb 23 so zu regeln, dass eine Aufnahmefläche des Lastverschiebungsmittels, auf welcher das Stückgut 5 aufliegt einen vorgesehenen Neigungswinkel einnimmt oder waagrecht zu liegen kommt.

Gemäss einem Ausführungsbeispiel ist das Regelungssystem zudem ausgestaltet, den Lastverschiebungsantrieb so zu anzusteuern, dass die Position des Massenschwerpunkts des Stückguts für das zu vollführende Fahrmanöver angepasst wird, während das fahrerlose Transportfahrzeug auf nur den mindestens zwei in der Achse angeordneten Rädern balanciert. Dies erlaubt eine höhere Vielfältigkeit der möglichen durch das fahrerlose Transportfahrzeug vollführbaren Fahrmanöver.

Gemäss der Erfindung wird zudem eine Sortieranlage vorgestellt. Die Sortieranlage umfasst einen Sortierbereich, eine Sortierlogik und eine Pluralität von fahrerlosen Transportfahrzeugen gemäss einer der oben beschriebenen Ausführungsformen. Der Sortierbereich umfasst mindestens einen Beladebereich und Sortierziele. Der Beladebereich ist ausgestaltet, die fahrerlosen Transportfahrzeuge mit Stückgütern zu beladen. Die Sortierlogik ist ausgestaltet, ein mit einem Stückgut beladenes Transportfahrzeug zu einem dem Stückgut zugeordneten Sortierziel zu führen.

Die Erfindung betrifft zudem die Verwendung eines fahrerlosen Transportfahrzeugs gemäss einer der oben beschriebenen Ausführungsformen zum Transportieren, Verteilen und/oder Sortieren von Stückgütern, insbesondere zum Transportieren, Verteilen und/oder Sortieren von Gepäckstücken oder Paketen.

Die Erfindung wird nachfolgend anhand der Figuren beispielsweise näher erläutert. Dabei zeigen:
Figuren 1-3 perspektivische Ansichten eines fahrerlosen Transportfahrzeugs gemäss einem Ausführungsbeispiel der Erfindung;
Figur 4 eine perspektivische Ansicht eines fahrerlosen Transportfahrzeugs gemäss einem weiteren Ausführungsbeispiel der Erfindung;
Figur 5 eine schematische Seitenansicht des in den Figuren 1-3 dargestellten Transportfahrzeugs, während es auf zwei in der Achse angeordneten Rädern balanciert;
Figur 6 eine schematische Seitenansicht des in den Figuren 1-3 dargestellten Transportfahrzeugs, während es automatisch beladen wird;
Figur 7 eine schematische Seitenansicht des in den Figuren 1-3 dargestellten Transportfahrzeugs, während es beschleunigt;
Figur 8 eine schematische Seitenansicht des in den Figuren 1-3 dargestellten Transportfahrzeugs, während es geradeaus fährt;
Figur 9 eine schematische Seitenansicht des in den Figuren 1-3 dargestellten Transportfahrzeugs, während es eine Steigung hinauffährt;
Figur 10 eine schematische Seitenansicht des in den Figuren 1-3 dargestellten Transportfahrzeugs, während es eine Steigung hinunterfährt;
Figur 11 eine schematische Seitenansicht des in den Figuren 1-3 dargestellten Transportfahrzeugs, während eines Bremsmanövers;
Figur 12 eine Sortieranlage gemäss einem Ausführungsbeispiel der Erfindung.

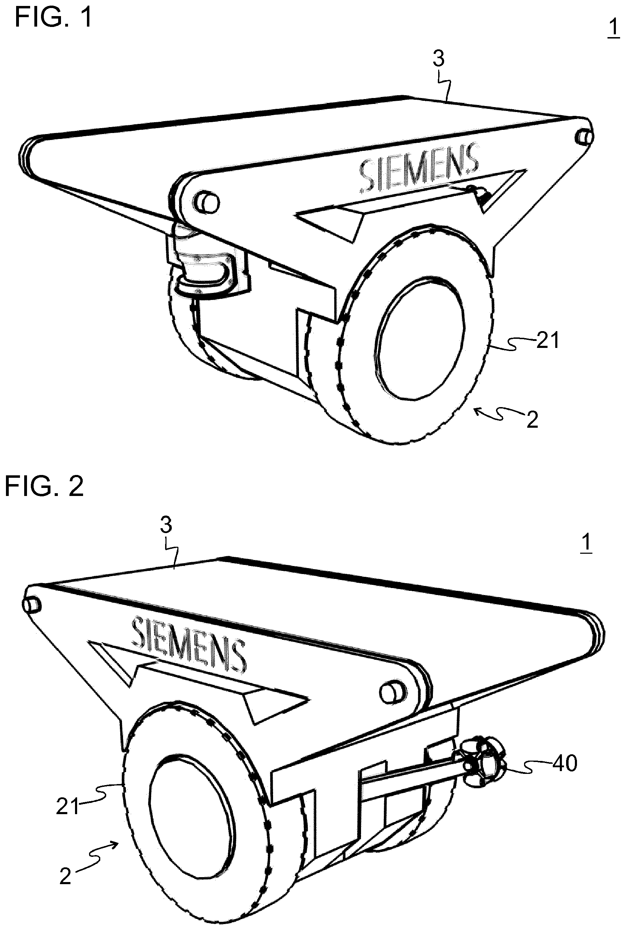

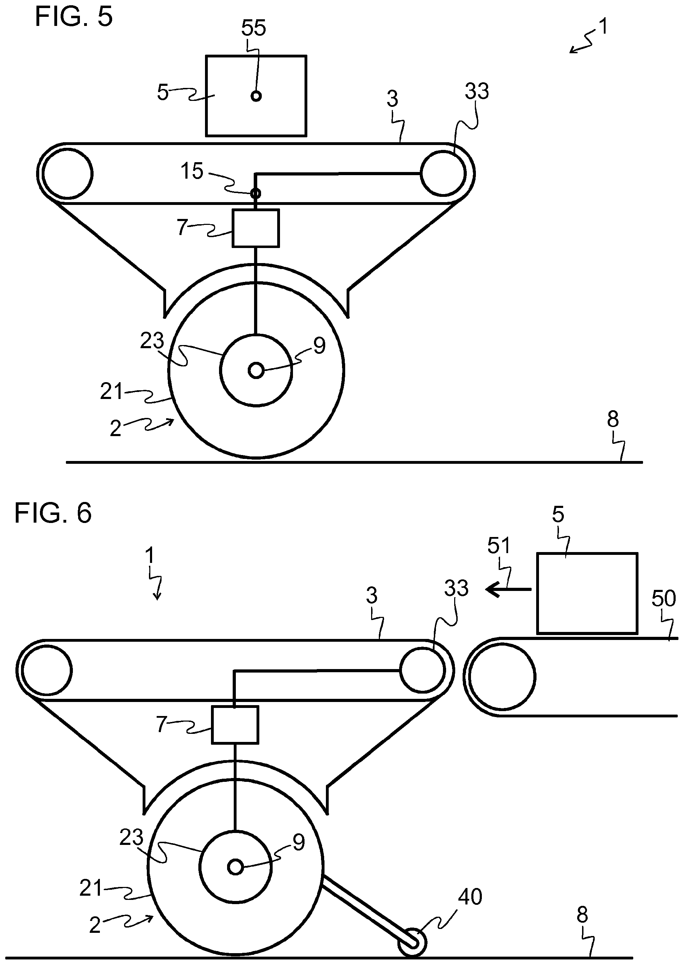

Figuren 1-3 zeigen perspektivische Ansichten eines fahrerlosen Transportfahrzeugs 1 gemäss einem Ausführungsbeispiel der Erfindung. Die Figuren 5-11 zeigen Seitenansichten des fahrerlosen Transportfahrzeugs 1 bei unterschiedlichen Manövern. Das fahrerlose Transportfahrzeug 1 lässt sich beispielsweise zum Transportieren, Verteilen und/oder Sortieren von Stückgütern, verwenden, beispielsweise zum Verteilen und/oder Sortieren von Gepäckstücken oder Paketen.

Das fahrerlose Transportfahrzeug 1 umfasst ein einachsiges Fahrwerk 2, einen Fahrantrieb 23, ein auf dem fahrerlosen Transportfahrzeug 1 installiertes Lastverschiebungsmittel 3 mit einem Lastverschiebungsantrieb 33 und ein Regelungssystem 7.

Das Lastverschiebungsmittel 3 ist ausgestaltet, ein Stückgut 5 aufzunehmen und dessen Massenschwerpunkt 55 auf dem fahrerlosen Transportfahrzeug 1 rechtwinklig zur Achse 9, in Fahrtrichtung und entgegen der Fahrtrichtung zu verschieben. Das Lastverschiebungsmittel 3 ist hierzu als Förderband ausgestaltet und der Lastverschiebungsantrieb 33 ist ausgestaltet, das Lastverschiebungsmittel anzutreiben.

Das Fahrwerk 2 umfasst zwei in einer Achse 9 angeordnete einzeln antreibbare Räder 21. Der Fahrantrieb 23 ist ausgestaltet, die mindestens zwei Räder 21 einzeln anzutreiben.

Das Regelungssystem 7 ist ausgestaltet, den Fahrantrieb 23 so zu regeln, dass ein Kippen des Transportfahrzeugs 1 um die Achse 9 des Fahrwerks 2 verhindert wird, während das fahrerlose Transportfahrzeug 1 auf nur den mindestens zwei in der Achse 9 angeordneten Rädern 21 balanciert, also während das fahrerlose Transportfahrzeug 1 mit nur den mindestens zwei in der Achse 9 angeordneten Rädern 21 eine Fahrbahn 8 oder eine sonstige Unterlage berührt.

Das Regelungssystem 7 ist zudem ausgestaltet, den Lastverschiebungsantrieb 33 so anzusteuern, dass die Position des Massenschwerpunkts 55 des Stückguts 5 für ein zu vollführendes Fahrmanöver angepasst wird, während das fahrerlose Transportfahrzeug 1 auf nur den mindestens zwei in der Achse 9 angeordneten Rädern 21 balanciert, also während das fahrerlose Transportfahrzeug 1 mit nur den mindestens zwei in der Achse 9 angeordneten Rädern 21 eine Fahrbahn 8 berührt.

Die Figuren 5-11 illustrieren wie Position des Massenschwerpunkts 55 des Stückguts 5 für ein zu vollführendes Fahrmanöver angepasst wird.

Figur 5 zeigt das mit dem Stückgut 5 beladene fahrerlose Transportfahrzeug 1 bei einem Fahrmanöver, bei welchem das Transportfahrzeug 1 balancierend an einer Stelle ruht, also keine Geschwindigkeit aufweist. Die Position des Massenschwerpunkts 55 des Stückguts 5 wird dabei durch das Lastverschiebungsmittel 3 so angepasst, dass der totale Schwerpunkt von Transportfahrzeug 1 und Stückgut 5 senkrecht über der Achse 9 zu liegen kommt. Dabei ist es nicht notwendig, dass diese Position berechnet wird, sondern es ist ausreichend, dass das Regelungssystem 7 diese Position des Stückguts mittels negativem Feedback selbständig einstellt, beispielsweise indem als Regelungsgrösse die zum Balancieren notwendigen Korrekturen des Fahrantriebs 23 minimiert werden.

Um das Transportfahrzeug 1 in unbeladenem Zustand zu balancieren, also ohne das Stückgut 5, wird das Regelungssystem 7 den Fahrantrieb 23 so regeln, dass der Schwerpunkt 15 des unbeladenen Transportfahrzeugs 1 senkrecht über der Achse 9 balanciert. Um das Transportfahrzeug 1 in beladenem Zustand, also mit dem Stückgut 5 zu balancieren, wird das Regelungssystem 7 den Fahrantrieb 23 so regeln, dass der gemeinsame Schwerpunkt 35 von Transportfahrzeug 1 und Stückgut 5 senkrecht über der Achse 9 balanciert.

In dem in Figur 5 dargestellten Ausführungsbeispiel ist die Massenverteilung des Transportfahrzeugs 1 als im Wesentlichen symmetrisch angenommen, wodurch eine besonders geeignete angepasste Position des Massenschwerpunkts 55 des Stückguts 5 für das zu vollführende Fahrmanöver, also für das ruhende Balancieren, in der Mitte des Transportfahrzeugs liegt. Dadurch ergibt sich auch eine im Wesentlichen waagrechte Position des als Gurtförderer ausgestalteten Lastverschiebungsmittels 3, somit eine waagechte Position der Lagerung des Stückguts 5. Es sind jedoch zahlreiche andere Ausführungsformen möglich, auch solche von Transportfahrzeugen mit nicht symmetrischer Masseverteilung, bei welchen die Asymmetrie durch eine Anpassung der Regelungsgrössen des Regelungssystem 7 ausgeglichen wird, insbesondere durch eine Regelung des Fahrantriebs 23 und/oder des Lastverschiebungsantriebs 33.

Figur 6 zeigt wie das Transportfahrzeug 1 durch eine stationäre Fördereinrichtung 50 automatisch mit dem Stückgut 5 beladen wird. Dabei positioniert sich das Transportfahrzeug 1 so angrenzend an die stationäre Fördereinrichtung 50, dass diese das Stückgut 5 auf das Transportfahrzeug 1 fördern kann.

Wie in Figur 6 ersichtlich, umfasst das Transportfahrzeug 1 zusätzlich ein Stützradsystem 40 das ausgestaltetet ist, bei ausgeschaltetem Regelungssystem 7 einen stabilen Stand des fahrerlosen Transportfahrzeugs 1 sicherzustellen. Das Stützradsystem ist ein- und ausfahrbar und ist bei dem in Figur 6 gezeigten Beladen des Transportfahrzeugs ausgefahren, um Hebelkräfte, die beim Beladen weit aussen am Transportfahrzeug ansetzen können, aufzufangen. Alternativ dazu kann das Stützradsystem 40 oder ein Ständersystem auch eingefahren sein, oder gänzlich fehlen, wobei ein Kippen des Transportfahrzeugs 1 um die Achse 9 des Fahrwerks 2 durch eine Regelung des Fahrantriebs 23 verhindert wird und das Transportfahrzeug 1 bereits beim Beladevorgang auf dem Fahrwerk 2, also auf nur den zwei in der Achse 9 angeordneten Rädern 21 balanciert.

In dem in Figur 6 dargestellten Vorgang wird das Transportfahrzeug 1 so positioniert, dass es vom der Gurtförderer 3 von hinten mit dem Stückgut 5 beladen wird. Alternativ dazu kann das Transportfahrzeug 1 sich auch so an die Fördereinrichtung 50 angrenzend positionieren, dass es seitlich von dieser mit dem Stückgut 5 beladen wird. In andern Ausführungsbeispielen kann das Transportfahrzeug 1 somit auch von der Seite beladen werden.

Auch kann das Transportfahrzeug 1 zusätzlich oder alternativ zu dem Lastverschiebungsmittel 3 weitere Fördermittel umfassen, die das Stückgut 5 beispielsweise auch quer zur Fahrtrichtung des Transportfahrzeugs 1 oder parallel zur Achse 9 verschieben können. Beispielsweise kann in einer Variante anstelle des Gurtförderers 3 das Transportfahrzeug 1 einen Eckumsetzer umfassen, der es erlaubt das Stückgut in Fahrtrichtung des Transportfahrzeugs sowie senkrecht dazu, also seitwärts auf der Auflagefläche des Transportfahrzeugs 1 zu fördern.

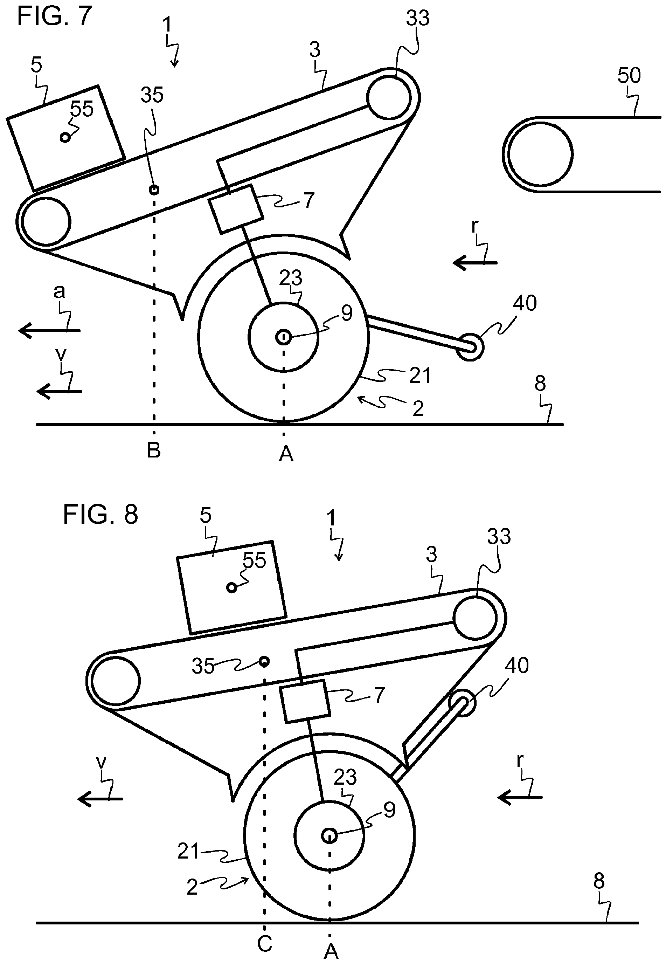

Figur 7 zeigt ein Anfahrmanöver, respektive Beschleunigungsmanöver des Transportfahrzeugs 1 nachdem dieses wie in Figur 6 dargestellt mit dem Stückgut 5 beladen wurde. Dabei wird das Lastverschiebungsmittel 3 so angesteuert, dass die Position des Massenschwerpunkts 55 des Stückguts 5 in Fahrtrichtung verschoben wird, bis sich das fahrerlose Transportfahrzeug 1 nach vorne, also in eine vorgesehene Fahrtrichtung r des Transportfahrzeugs 1 neigt. Der gemeinsame Massenschwerpunkt 35 von Transportfahrzeug 1 und Stückgut 5 liegt dann in Fahrtrichtung vor der Achse 9, wie durch die gestrichelten Linien A und B ersichtlich ist. Um ein vollständiges Kippen des Transportfahrzeugs 1 zu verhindern, beschleunigt das Transportfahrzeug 1 in die vorgesehene Fahrtrichtung r, indem das Regelungssystem 7 den Fahrantrieb 23 und optional auch den Lastverschiebungsantrieb so regelt, dass das Fahrzeug in dieser geneigten Lage bis auf eine vorgesehene Geschwindigkeit v beschleunigt wird und während der Beschleunigung a balanciert. Ein solches Fahrmanöver hat gegenüber einem herkömmlichen einachsigen geregelten Transportfahrzeug gleich mehrere Vorteile:
- Das Transportfahrzeug 1 braucht nicht zunächst entgegen der vorgesehenen Fahrtrichtung r zu beschleunigen, um die für eine Fahrt in der vorgesehenen Fahrtrichtung r gewünschte Neigung zu bewirken. Dadurch kann effizienter angefahren werden;
- Eine solche Beschleunigung entgegen der vorgesehenen Fahrtrichtung r wäre in der in Figur 6 dargestellten Situation nicht oder kaum möglich, da das Transportfahrzeug für die Beladung möglichst nahe an die stationäre Fördereinrichtung 50 angrenzen sollte;
- Während des gesamten Beschleunigungsvorgangs kann die Neigung der Oberfläche des Gurtförderers 3 durch das Regelungssystem 7 so geregelt werden, dass sie der Trägheit des Stückguts entgegenwirkt und somit einem möglichen Rutschen auf dem Gurtförderer entgegen der vorgesehenen Fahrtrichtung r entgegenwirkt, und dadurch ein mögliches Herunterfallen des Stückguts hinten auf dem Transportfahrzeug 1 verhindert.

Das Stützradsystem 40 wird während des Beschleunigungsmanövers eingefahren.

Figur 8 zeigt ein Fahrmanöver bei einer Geradeausfahrt. Dabei steuert das Regelungssystem 7 den Lastverschiebungsantrieb 33 so an, dass die Position des Massenschwerpunkts 55 des Stückguts 5 eine etwas weniger starke Neigung in Fahrtrichtung bewirkt als bei dem anhand von Figur 7 dargestellten Beschleunigungsmanöver. Bei einer Geradeausfahrt mit im Wesentlichen konstanter Geschwindigkeit ist ein in Fahrtrichtung r etwas vor der Achse 9 liegender totaler Massenschwerpunkt 35 von Transportfahrzeug 1 und Stückgut 5 gewünscht, da bedingt durch den Luftwiderstand und Reibungsverluste in den Rädern 21, der Fahrantrieb 21 nach wie vor ein Drehmoment auf die Räder 21 geben soll. In Figur 8 ist dieser Versatz des gemeinsamen Massenschwerpunktes 35 und Achse 9 durch die gestrichelten Linien A und C sichtbar gemacht.

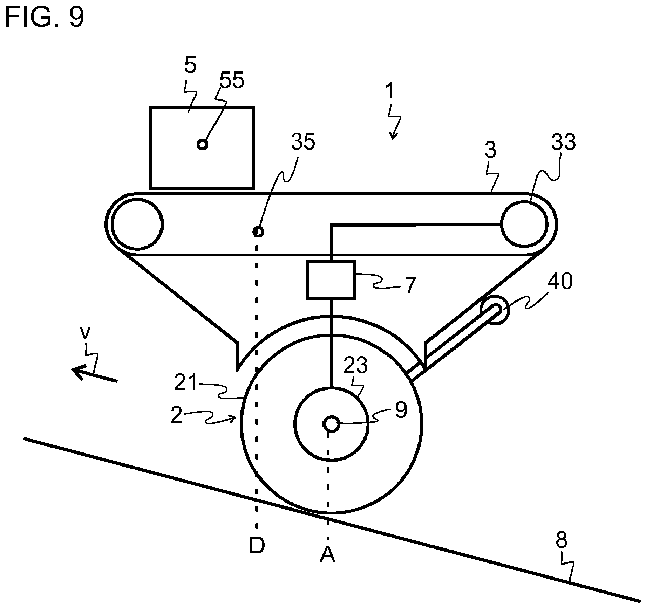

Figur 9 zeigt das Transportfahrzeug 1, das als Fahrmanöver ein Befahren einer Steigung in Aufwärtsrichtung vollführt. Dabei ist das das Regelungssystem 7 ausgestaltet, den Lastverschiebungsantrieb 33 so zu anzusteuern, dass die Position des Massenschwerpunkts des Stückguts 5 in der Fahrtrichtung verschoben wird, respektive, dass der totale Schwerpunkt 35 des Stückguts 5 und des Transportfahrzeugs 1 in Fahrtrichtung vor der Achse 9 liegt, wie durch die gestrichelten Linien A und D ersichtlich wird. Gemäss einer bevorzugten Ausführungsform kann dabei die Position des Stückguts 5 so eingestellt werden, dass das Stückgut 5 waagrecht auf einer Aufnahmefläche des Lastverschiebungsmittels 3 aufliegt.

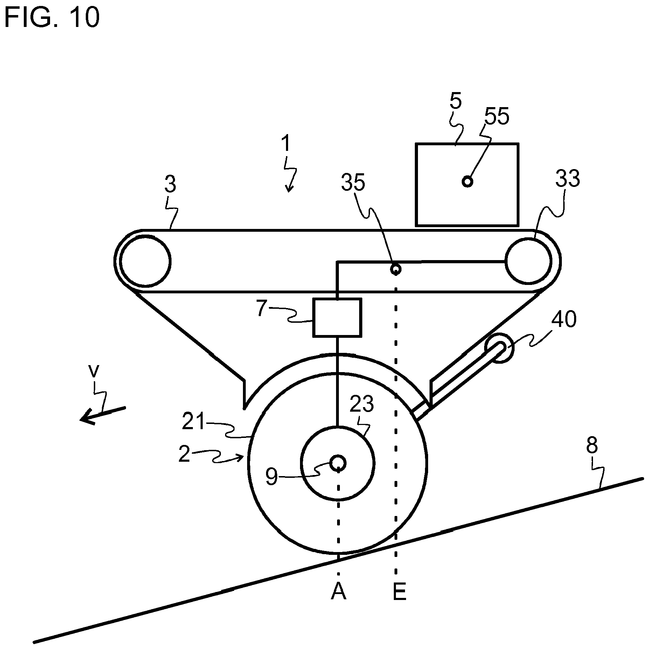

Figur 10 zeigt das Transportfahrzeug 1, das als Fahrmanöver ein Befahren einer Steigung in Abwärtsrichtung vollführt. Dabei ist das das Regelungssystem 7 ausgestaltet, den Lastverschiebungsantrieb 33 so zu anzusteuern, dass die Position des Massenschwerpunkts 55 des Stückguts 5 entgegen der Fahrtrichtung verschoben wird, respektive, dass der totale Schwerpunkt 35 des Stückguts 5 und des Transportfahrzeugs 1 in Fahrtrichtung gesehen hinter der Achse 9 liegt, wie durch die gestrichelten Linien A und E ersichtlich wird. Gemäss einer bevorzugten Ausführungsform kann dabei die Position des Stückguts 5 so eingestellt werden, dass das Stückgut waagrecht auf einer Aufnahmefläche des Lastverschiebungsmittels 3 aufliegt.

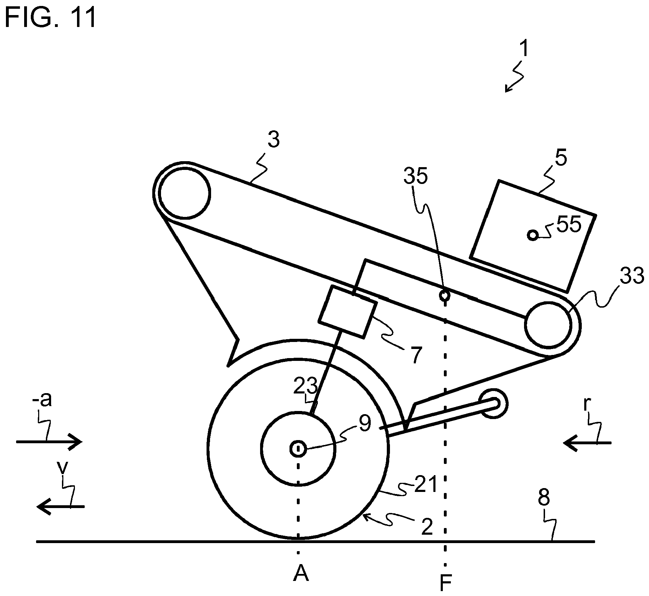

Figur 11 zeigt ein Bremsmanöver des mit dem Stückgut 5 beladenen Transportfahrzeugs 1. Dabei wird das Lastverschiebungsmittel 3 so angesteuert, dass die Position des Massenschwerpunkts 55 des Stückguts 5 entgegen der Fahrtrichtung verschoben wird, dass sich das fahrerlose Transportfahrzeug 1 nach hinten, also entgegen der Fahrtrichtung r des Transportfahrzeugs 1 neigt. Der gemeinsame Massenschwerpunkt 35 von Transportfahrzeug 1 und Stückgut 5 liegt dann in Fahrtrichtung r betrachtet hinter der Achse 9, wie durch die gestrichelten Linien A und F ersichtlich ist. Um ein vollständiges Kippen des Transportfahrzeugs 1 zu verhindern, bremst das Transportfahrzeug 1, indem das Regelungssystem 7 den eine Fahrzeugbremse und optional auch den Lastverschiebungsantrieb 33 so regelt, dass das Fahrzeug 1 in dieser geneigten Lage bis auf eine vorgesehene Geschwindigkeit abgebremst wird und während des Bremsvorgangs welcher durch die zu diesem Zeitpunkt auf das Rad 21 wirkende negative Beschleunigung -a dargestellt ist, balanciert. Ein solches Fahrmanöver hat gegenüber einem herkömmlichen einachsigen geregelten Transportfahrzeug gleich mehrere Vorteile:
- Das Transportfahrzeug 1 braucht nicht zunächst in Fahrtrichtung r zu beschleunigen, um die für das Bremsmanöver gewünschte Neigung zu bewirken. Dadurch verkürzt sich der Bremsweg;
- Während des gesamten Bremsvorgangs kann die Neigung der Oberfläche des Gurtförderers 3 durch das Regelungssystem 7 so geregelt werden, dass sie der Trägheit des Stückguts 5 entgegenwirkt und somit einem möglichen Rutschen auf dem Gurtförderer in Fahrtrichtung r entgegenwirkt, und dadurch ein mögliches Herunterfallen des Stückguts 5 vorne auf dem Transportfahrzeug 1 verhindert.

Für alle in den Figuren gezeigten Fahrmanöver gilt: Um die Position des Massenschwerpunkts 55 des Stückguts 5 für ein zu vollführendes Fahrmanöver anzupassen ist es nicht notwendig, diese Position zu errechnen, sondern die Position kann auch regelungstechnisch durch das Regelungssystem 7 eingestellt werden.

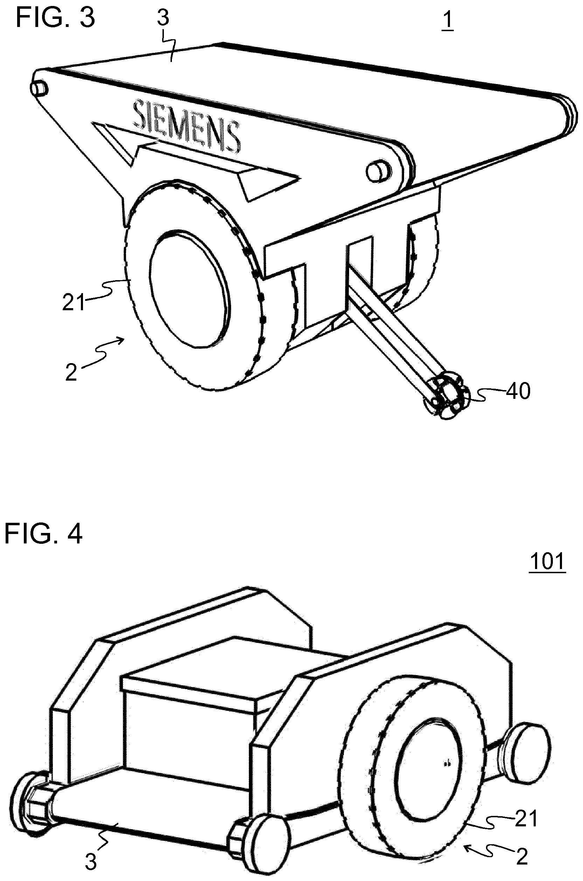

Figur 4 zeigt ein fahrerloses Transportfahrzeug 101 gemäss einem weiteren Ausführungsbeispiel der Erfindung, bei welchem die das Lastverschiebungsmittel 3 tiefer gelegt ist, und bei welchem der Schwerpunkt des Transportfahrzeugs 101 tief liegt. Dies ermöglichet es, das Transportfahrzeug leichter in Balance auf den Rädern 21 zu halten. Das Transportfahrzeug 101 weist zudem Seitenwände auf.

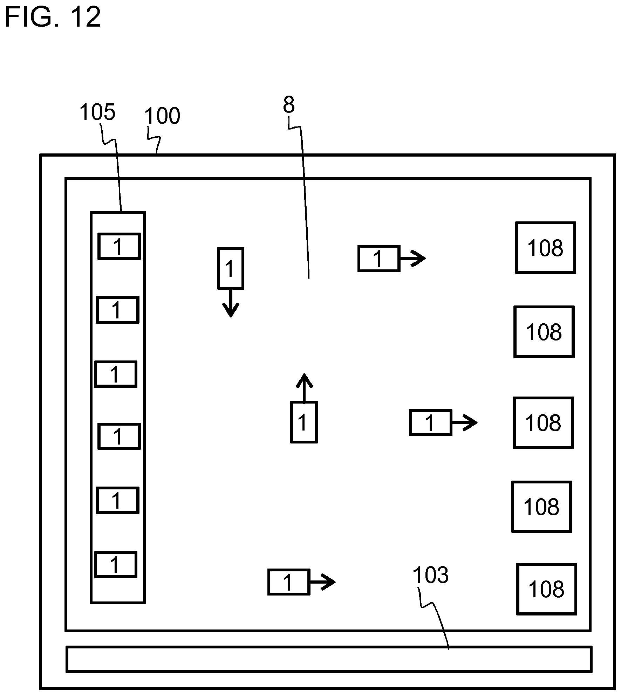

Figur 12 zeigt eine Sortieranlage 100, die einen Sortierbereich 101, eine Sortierlogik 103 und eine Pluralität von fahrerlosen Transportfahrzeugen 1 umfasst. Der Sortierbereich 101 umfasst mindestens einen Beladebereich 105 und Sortierziele 108. Der Beladebereich 105 ist ausgestaltet, die fahrerlosen Transportfahrzeuge 1 mit Stückgütern zu beladen. Die Sortierlogik 103 ist ausgestaltet, ein mit einem Stückgut 5 beladenes Transportfahrzeug 1 zu einem dem Stückgut 5 zugeordneten Sortierziel 108 zu führen und das Transportfahrzeug 1 zu veranlassen, das Stückgut in das dem Stückgut zugeordnete Sortierziel abzugeben.

Durch eine Nutzung nur einer Achse, einem balancierenden aktiven Kippstabilitätssystem (inverses Einfachpendel, Segway-Prinzip) und einer schwerpunktverlagernden aufgesetzten Fördertechnik (inverses Doppelpendel) ermöglichen weitere Ausführungsbeispiele der Erfindung zudem eine hohe Beweglichkeit, da das Transportfahrzeug auf der Stelle drehen kann, eine freie Navigation sowie eine frei Fahrwegoptimierung. Zudem ist eine hohe Geschwindigkeitsbandbreite möglich, beispielsweise von 1 m/s bis 10 m/s. Auch können High-Speed-Verbindungstrecken gefahren werden. Ausführungsformen der Erfindung erlauben zudem eine hohe selbständige Steigfähigkeit, sowie eine hohe Unabhängigkeit von Bodenunebenheiten, was insbesondere in Flughafenhallen, Vorfeldern und Paketzentren vor Vorteil sein kann.

Durch die mechanische Simplizität des Fahrzeuges können die Kosten im Vergleich zu bekannten aktuellen AGV Konstruktionen erheblich gesenkt werden. Das Transportfahrzeug kann als selbstbalancierendes 1-Achs Querband FTF für inhomogene Stückgüter ausgeführt sein.

Ausführungsformen der Erfindung basieren in der Kombination aus einem aktiv selbstbalancierendem 1-Achs Fahrzeug (Segway (Inverses Einfachpendel)) und einer aktiv den Lastschwerpunkt verschiebenden aufgesetzten Fördertechnik. Die zugehörigen kinematischen, regelungstechnischen und physikalischen Zusammenhänge für eine solche Kombination sind aus dem Problem des "Inverses Doppelpendels" bekannt.

Einfachpendel: https://www.youtube.com/watch?v=6diEXY6JVPM Doppelpendel: https://www.youtube.com/watch?v=ew-yP6uZbrU
Ausführungsformen von solchen Kombinationen erlauben einen einfachen und flexiblen Transport von Stückgütern mit einem Segway-Prinzip, der sonst nur mit großen Einschränkungen und umständlich realisierbar wäre.

## Patentansprüche

1. Fahrerloses Transportfahrzeug (1) für Stückgüter (5), umfassend ein Fahrwerk (2), einen Fahrantrieb (23), ein auf dem fahrerlosen Transportfahrzeug (1) installiertes Lastverschiebungsmittel (3) mit einem Lastverschiebungsantrieb (33) und ein Regelungssystem (7);
wobei das Fahrwerk (2) mindestens zwei in einer Achse (9) angeordnete Räder (21) umfasst;
wobei der Fahrantrieb (23) ausgestaltet ist, die mindestens zwei Räder (21) anzutreiben;
wobei das Lastverschiebungsmittel (3) ausgestaltet ist, ein Stückgut (5) aufzunehmen und dessen Massenschwerpunkt (55) auf dem fahrerlosen Transportfahrzeug (1) zu verschieben; wobei das Regelungssystem (7) ausgestaltet ist, den Fahrantrieb (23) so zu regeln, dass ein Kippen des Transportfahrzeugs (1) um die Achse (9) des Fahrwerks (2) verhindert wird, während das fahrerlose Transportfahrzeug (1) auf nur den mindestens zwei in der Achse (9) angeordneten Rädern (21) balanciert;
wobei das Regelungssystem (7) zudem ausgestaltet ist, den Lastverschiebungsantrieb (33) so anzusteuern, dass die Position des Massenschwerpunkts (55) des Stückguts (5) für ein zu vollführendes Fahrmanöver angepasst wird.

2. Fahrerloses Transportfahrzeug (1) gemäss Anspruch 1, wobei das Lastverschiebungsmittel (3) als Fördermittel, beispielsweise als Förderstrecke, Förderband, Gurtförderer oder Rollenförderer ausgestaltet ist.

3. Fahrerloses Transportfahrzeug (1) gemäss einem der vorhergehenden Ansprüche, wobei die Räder (21) einzeln antreibbar sind.

4. Fahrerloses Transportfahrzeug (1) gemäss einem der vorhergehenden Ansprüche, wobei das Fahrwerk (2) genau zwei seitlich an dem fahrerlosen Transportfahrzeug in der Achse angeordnete Räder (21) umfasst.

5. Fahrerloses Transportfahrzeug (1) gemäss einem der vorhergehenden Ansprüche, wobei das Lastverschiebungsmittel (3) ausgestaltet ist, den Massenschwerpunkt des Stückguts (5) auf dem fahrerlosen Transportfahrzeug (1) in Fahrtrichtung und entgegen der Fahrtrichtung verschieben.

6. Fahrerloses Transportfahrzeug (1) gemäss einem der vorhergehenden Ansprüche, zusätzlich umfassend ein Stützradsystem (40) oder ein Ständersystem (40) das ausgestaltetet ist, bei ausgeschaltetem Regelungssystem (7) einen stabilen Stand des fahrerlosen Transportfahrzeugs (1) sicherzustellen.

7. Fahrerloses Transportfahrzeug (1) gemäss Anspruch 6, wobei das Regelungssystem (7) ausgestaltet ist, das Stützradsystem (40) oder Ständersystem (40) für das zu vollführende Fahrmanöver ein- und/oder auszufahren.

8. Fahrerloses Transportfahrzeug (1) gemäss einem der vorhergehenden Ansprüche, wobei das Fahrmanöver ein Befahren einer Steigung umfasst und das Regelungssystem (7) ausgestaltet ist, für das Befahren der Steigung den Lastverschiebungsantrieb (33) so zu anzusteuern, dass die Position des Massenschwerpunkts des Stückguts (5) in oder entgegen der Fahrtrichtung verschoben wird.

9. Fahrerloses Transportfahrzeug (1) gemäss einem der vorhergehenden Ansprüche, wobei das Fahrmanöver ein Bremsmanöver umfasst und das Regelungssystem (7) ausgestaltet ist, den Lastverschiebungsantrieb (33) für das Bremsmanöver so anzusteuern, dass die Position des Massenschwerpunkts des Stückguts (5) entgegen der Fahrtrichtung verschoben wird.

10. Fahrerloses Transportfahrzeug (1) gemäss einem der vorhergehenden Ansprüche, wobei das Fahrmanöver ein Anfahr- oder Beschleunigungsmanöver umfasst und das Regelungssystem (7) ausgestaltet ist, den Lastverschiebungsantrieb (33) für das Anfahr- oder Beschleunigungsmanöver so zu anzusteuern, dass die Position des Massenschwerpunkts des Stückguts (5) in Fahrtrichtung verschoben wird.

11. Fahrerloses Transportfahrzeug (1) gemäss einem der vorhergehenden Ansprüche, wobei das Regelungssystem (7) ausgestaltet ist, den Lastverschiebungsantrieb (33) und/oder den Fahrantrieb (23) so zu regeln, dass eine Aufnahmefläche des Lastverschiebungsmittels, auf welcher das Stückgut (5) aufliegt einen vorgesehenen Neigungswinkel einnimmt oder waagrecht zu liegen kommt.

12. Fahrerloses Transportfahrzeug (1) gemäss einem der vorhergehenden Ansprüche, wobei das Regelungssystem (7) zudem ausgestaltet ist, den Lastverschiebungsantrieb (33) so zu anzusteuern, dass die Position des Massenschwerpunkts des Stückguts (5) für das zu vollführende Fahrmanöver angepasst wird, während das fahrerlose Transportfahrzeug (1) auf nur den mindestens zwei in der Achse (9) angeordneten Rädern (21) balanciert.

13. Sortieranlage (100) umfassend einen Sortierbereich (101), eine Sortierlogik (103) und eine Pluralität von fahrerlosen Transportfahrzeugen (1) gemäss einem der vorhergehenden Ansprüche;
wobei der Sortierbereich (101) mindestens einen Beladebereich (105) und Sortierziele (108) umfasst;
Wobei der Beladebereich (105) ausgestaltet ist, die fahrerlosen Transportfahrzeuge (1) mit Stückgütern zu beladen;
Wobei die Sortierlogik (103) ausgestaltet ist, ein mit einem Stückgut (5) beladenes Transportfahrzeug (1) zu einem dem Stückgut (5) zugeordneten Sortierziel (108) zu führen.

14. Verwendung eines fahrerlosen Transportfahrzeugs (1) nach einem der Ansprüche 1 bis 12 zum Transportieren, Verteilen und/oder Sortieren von Stückgütern.

15. Verwendung eines fahrerlosen Transportfahrzeugs nach einem der Ansprüche 1 bis 12 zum Transportieren, Verteilen und/oder Sortieren von Gepäckstücken oder Paketen.
